# EUROPÄISCHE PATENTSCHRIFT

(11) **EP 2 242 665 B1**
(45) Veröffentlichungstag und Bekanntmachung des Hinweises auf die Patenterteilung: **15.06.2011**
(21) Anmeldenummer: 09709963.4
(22) Anmeldetag: 13.02.2009
(51) Int. Cl.: B60L 3/00, B60L 3/04

(54) **VERSORGUNG VON HILFSBETRIEBEN IN EINEM SCHIENENFAHRZEUG MIT ELEKTRISCHER ENERGIE**
SUPPLY OF AUXILIARY DRIVES IN A RAIL VEHICLE WITH ELECTRICAL POWER
ALIMENTATION EN ÉNERGIE ÉLECTRIQUE D'AUXILIAIRES DANS UN VÉHICULE SUR RAILS

(30) Priorität: 15.02.2008 DE 102008009512
(43) Veröffentlichungstag der Anmeldung: 27.10.2010
(73) Patentinhaber: Bombardier Transportation GmbH, 10785 Berlin (DE)
(72) Erfinder: JÖRG, Markus, CH-5236 Remigen (CH)
(74) Vertreter: Bressel, Burkhard
(86) Internationale Anmeldenummer: PCT/EP2009/001205
(87) Internationale Veröffentlichungsnummer: WO 2009/100952

(56) Entgegenhaltungen:
- EP-A2- 1 110 797
- DE-A1- 4 447 446
- DE-C- 497 815
- US-A1- 2002 070 821
- US-A1- 2005 082 133
- US-A1- 2006 255 656

## Beschreibung

Die Erfindung betrifft ein System zur Versorgung von Hilfsbetrieben in einem Schienenfahrzeug mit elektrischer Energie. Die Erfindung betrifft ferner ein Verfahren zum Schützen eines solchen Systems bei einem unbeabsichtigten Kontakt mit einem Bezugspotential, insbesondere mit Fahrzeugmasse.

Lokomotiven oder andere Schienenfahrzeuge oder Teile von Zugverbänden, die dem Betrieb des Schienenfahrzeugs oder Zugverbandes dienen, weisen außer den unmittelbar für die Traktion erforderlichen Einrichtungen (z. B. Hochspannungsaggregat, Traktionswechselrichter und Fahrmotoren) zusätzliche Einrichtungen auf, die den Betrieb ermöglichen. Diese Hilfseinrichtungen oder Hilfsbetriebe benötigen ebenfalls elektrische Energie und sind in speziellen Fällen über einen Hilfsbetriebe-Wechselrichter an einen Traktions-Zwischenkreis angeschlossen, aus dem auch die für die Traktion benötigte Energie bezogen wird. Beispiele sind Lüfter der Fahrmotoren, Kühler der Stromrichter, Kompressoren zum Komprimieren von Gasen (z. B. zur Erzeugung von Druckluft für eine Bremsanlage), eine Feuerlöscheinrichtung der Lokomotive, elektronische Einrichtungen zur Steuerung des Betriebs der Lokomotive, Batterieladegeräte, Heizungen, z. B. Scheibenheizung, Klimageräte, Steckdosen, Lichteinrichtungen. Eine weitere Gruppe von elektrischen Einrichtungen, die in unter Umständen an die Lokomotive angekoppelten Schienenfahrzeug-Einheiten angeordnet sind, kann über einen eigenen, zusätzlichen Wechselrichter an den Traktionszwischenkreis angeschlossen sein.

Die Erfindung ist jedoch nicht auf die Anwendung in Lokomotiven und auch nicht auf elektrische Systeme beschränkt, die einen Traktionszwischenkreis aufweisen. Vielmehr kann die für den Betrieb des Hilfsbetriebe-Systems benötigte elektrische Energie auch auf andere Weise bereitgestellt werden. In dieser Beschreibung wird allgemein der Begriff Energiequelle" verwendet, auch wenn es sich nicht tatsächlich um den Teil eines elektrischen Systems handelt, der elektrische Energie generiert. Vielmehr wird die elektrische Energie z. B. von einem Dieselmotor generiert oder z. B. über ein Hochspannungsnetz (z. B. mit Oberleitungs-Fahrdraht oder Stromschiene) zu dem Schienenfahrzeug übertragen. In der Terminologie dieser Beschreibung ist aber z. B. ein etwaig vorhandener Traktionszwischenkreis bzw. Gleichspannungs-Zwischenkreis, an den über einen Stromrichter auch Fahrmotoren angeschlossen sind, eine Energiequelle für das Hilfsbetriebe-System.

Üblicherweise sind alle Hilfsbetriebe-Systeme in Schienenfahrzeugen so konzipiert, dass sie ohne Bezugspotential aufkommen. Dies bedeutet, dass sie gegenüber Fahrzeugmasse bzw. "Erde" auf einem schwankenden elektrischen Potential arbeiten können. Wenn ein Kontakt, insbesondere ein Kurzschluss, zu Fahrzeugmasse auftritt, wird der frei schwankende Zustand aufgehoben und der Kontaktpunkt liegt auf Fahrzeugmasse. Dies allein führt noch nicht zu Problemen wie hohe Kurzschlussströme. Wenn jedoch ein weiterer Kontakt zu Fahrzeugmasse auftritt, können hohe Kurzschlussströme entstehen, die Systemkomponenten zerstören können und auch Rückwirkungen auf die anderen Teile des elektrischen Gesamtsystems haben können, z. B. auf den Traktionszwischenkreis und die an ihn angeschlossenen Stromrichter.

Es ist daher bereits vorgeschlagen worden, das Hilfsbetriebe-System über eine Reihenschaltung aus einem Widerstand und einem Schutzschalter mit dem Bezugspotential zu verbinden. Tritt an einer weiteren Stelle ein Kontakt zu dem Bezugspotential auf, wird der fließende Kurzschlussstrom durch den Widerstand begrenzt und der Schutzschalter öffnet entsprechend seiner zeitlichen Ansprechcharakteristik.

Die Kosten für eine solche Lösung sind jedoch verhältnismäßig hoch. Hinzu kommt, dass in Lokomotiven und Triebzügen üblicherweise mehrere Hilfsbetriebe-Systeme vorhanden sind, so dass die Kosten sich weiter erhöhen.

US 2006/0255656 A1 beschreibt ein Verfahren und ein System zum Detektieren und Durchführen von Diagnosen in Bezug auf einen Masseschluss in einem elektrischen Antriebssystem eines Zugfahrzeugs, z. B. einer Lokomotive. Der Fehlerstrom kann durch eine Stromüberwachungseinrichtung überwacht werden, die einer Impedanz (z. B. einem 10 Ohm Widerstand) parallel geschaltet ist.

DE 44 47 446 A1 beschreibt eine Schaltungsanordnung für die Bordnetzversorgung eines Schienenfahrzeuges. Bei einem Drehstrom-Bordnetzumformer ist eine Potentialtrennung der Eingangsgleichspannung gegenüber der Ausgangsdrehspannung vorgesehen. Zwischen einem Pulswechselrichter und dem Ausgangsfilter ist ein Trenntransformator geschaltet und beide Elemente sind zu einer Transformator-Filtereinheit kombiniert. Will man auf die Potentialtrennung verzichten, kann für die Transformator-Filtereinheit auch ein Spartransformator Verwendung finden.

Es ist eine Aufgabe der vorliegenden Erfindung ein System und ein Verfahren der eingangs genannten Art anzugeben, mit denen sich ein wirksamer Schutz eines Hilfsbetriebe-Systems zuverlässig bei geringen Kosten gewährleisten lässt.

Es ist eine grundlegende Überlegung der vorliegenden Erfindung, dass der in Reihe zu dem Schutzschalter angeordnete Strombegrenzungswiderstand nicht erforderlich ist. Zwar ist es beim Auftreten eines zweiten Kurzschlusses zu Fahrzeugmasse theoretisch möglich, dass sehr hohe Kurzschlussströme über den noch geschlossenen Schutzschalter fließen. Diese Kurzschlussströme können jedoch auf andere Weise begrenzt werden.

Es wird daher ein System zur Versorgung von Hilfsbetrieben in einem Schienenfahrzeug mit elektrischer Energie vorgeschlagen, wobei
- das System über einen Trenntransformator mit einer Energiequelle, z.B. einem Gleichspannungs-Zwischenkreis, verbunden ist,
- das System ohne Zwischenschaltung eines den Stromfluss begrenzenden Widerstandes über einen Schutzschalter mit einem elektrischen Bezugspotenzial verbunden ist, insbesondere mit Fahrzeugmasse,
- der Schutzschalter ausgestaltet ist, beim Auftreten eines Stromflusses durch den geschlossenen Schutzschalter, der durch einen zusätzlichen Kontakt des Systems zu dem Bezugspotenzial verursacht wird, zu öffnen.

Unter dem Begriff System zur Versorgung von Hilfsbetrieben wird eine Anordnung mit elektrischen Leitungen verstanden, die der Versorgung der Hilfsbetriebe dient. Insbesondere kann es sich bei dem System um ein Dreiphasen-System handeln, so dass Hilfsbetriebe an einer oder mehreren Phasen einer Wechselstromversorgung angeschlossen sein können. Insbesondere kann der Schutzschalter einen Stempunkt der drei Phasen mit dem Bezugspotential verbinden.

"Ohne Zwischenschaltung eines Widerstandes" bedeutet, dass der Schutzschalter eine elektrische Leitung des Hilfsbetriebe-Systems unmittelbar mit dem Bezugspotential verbindet. "Unmittelbar" bedeutet, dass kein diskretes Bauteil in dieser Verbindung angeordnet ist, welches den Gleichstromwiderstand erhöht. Selbstverständlich haben die Verbindungsleitungen einen geringen ohmschen Widerstand. Jedoch ist dieser Widerstand so gering, dass er einen hohen Kurzschlussstrom nicht nennenswert begrenzen würde.

Als Schutzschalter kommen an sich bekannte Schalter in Frage, die in der Art von Sicherungsautomaten einen hohen Stromfluss detektieren und entsprechend der Auslösecharakteristik des Schutzschalters den Schaltkontakt öffnen, wenn ein Grenzwert überschritten wird bzw. wenn die Stromüberwachung des Schalters anspricht. In der Regel muss ein solcher Sicherungsautomat per Hand eingeschaltet werden, nachdem die Ursache für den hohen Stromfluss wieder beseitigt ist.

In einer bevorzugten Ausführungsform ist der Transformator auf seiner Primärseite über einen Stromrichter mit der Energiequelle verbunden. Der Stromrichter wird durch Ein- und Ausschalten von Stromventilen betrieben, wobei eine Steuerung zum Steuern des Ein- und Ausschaltens vorgesehen ist, die derart ausgestaltet ist, dass beim Überschreiten eines vorgegebenen Phasen-Stromgrenzwerts in einer Phase und/oder beim Überschreiten eines Gesamt-Stromgrenzwerts durch die Summe der Ströme in mehreren Phasen, der Strom in der Phase oder in allen Phasen auf den jeweiligen Grenzwert begrenzt wird, indem das Ein- und Ausschalten der Ventile entsprechend gesteuert wird. Z. B. wird die Zeit, die eine Phase während einer Halbwelle des Wechselstroms eingeschaltet ist, reduziert und/oder es wird ein zeitlicher Versatz des Phasenstroms gegenüber dem ungestörten Fall erzeugt.

Durch die beschriebene Steuerung des Stromrichters, bei dem es sich im Fall eines Gleichspannungs-Zwischenkreises um einen DC/AC-Wandler handelt, kann der Strom auch auf der Sekundärseite wirksam begrenzt werden, da die Stromstärken auf der Primärseite und der Sekundärseite über die Induktivitäten des Trenntransformators miteinander gekoppelt sind. Ein Beispiel für eine Stromrichter Steuerung ist die von der Bombardier Transportation GmbH, Berlin, Deutschland angebotene Steuerung mit der Bezeichnung MITRAC DCU2. Die Beschreibung des dazugehörigen Schutzmechanismus ist in der deutschen Patentanmeldung DE 199 62 615 A1 und der europäischen Patentanmeldung EP 1 110 797 A2 beschrieben. Dem Schutzschalter kann in einer bevorzugten Ausgestaltung eine Kapazität parallel geschaltet sein, so dass das System parallel zu dem Schutzschalter über die Kapazität mit dem Bezugspotential verbunden ist. Hierdurch können so genannte "common mode"-Ströme abgeleitet werden. Unter common mode-Strömen werden Ströme verstanden, die anders als es für ein Mehrphasensystem üblich ist, in allen Phasen zeitgleich in die gleiche Richtung fließen.

Weiterhin wird es bevorzugt, dass das System über einen parallel zu dem Schutzschalter angeordneten hochohmigen Widerstand (z. B. mehr als 20 kOhm) mit dem Bezugspotential verbunden ist. Folglich fließt über diesen Widerstand permanent ein geringer Strom.

Ferner gehört zum Umfang der Erfindung ein Verfahren zum Schützen eines Systems zur Versorgung von Hilfsbetrieben in einem Schienenfahrzeug mit elektrischer Energie. Ausgestaltungen und bevorzugte Ausführungsformen des Verfahrens ergeben sich aus der Beschreibung des Systems. Insbesondere wird Folgendes vorgeschlagen: Ein Verfahren zum Schützen eines Systems zur Versorgung von Hilfsbetrieben in einem Schienenfahrzeug mit elektrischer Energie bei einem unbeabsichtigten Kontakt mit einem Bezugspotenzial, insbesondere mit Fahrzeugmasse, wobei
- das System über einen Trenntransformator mit einer Energiequelle, z.B. einem Gleichspannungs-Zwischenkreis, verbunden wird,
- das System ohne Zwischenschaltung eines den Stromfluss begrenzenden Widerstandes über einen Schutzschalter mit einem elektrischen Bezugspotenzial verbunden wird, insbesondere mit Fahrzeugmasse,
- der Schutzschalter beim Auftreten eines Stromflusses durch den geschlossenen Schutzschalter, der durch einen zusätzlichen Kontakt des Systems zu dem Bezugspotenzial verursacht wird, geöffnet wird.

Ausführungsbeispiele der Erfindung werden nun unter Bezugnahme auf die beigefügte Zeichnung beschrieben. Die einzelnen Figuren der Zeichnung zeigen:
- Figur 1: einen Gleichspannungszwischenkreis mit daran angeschlossenen Hilfsbetrieben und
- Figur 2: den Hilfsbetriebe-Umrichter, den Trenntransformator und die Schutzeinrichtung gemäß Figur 1 in vergrößerte Darstellung mit weiteren Details.

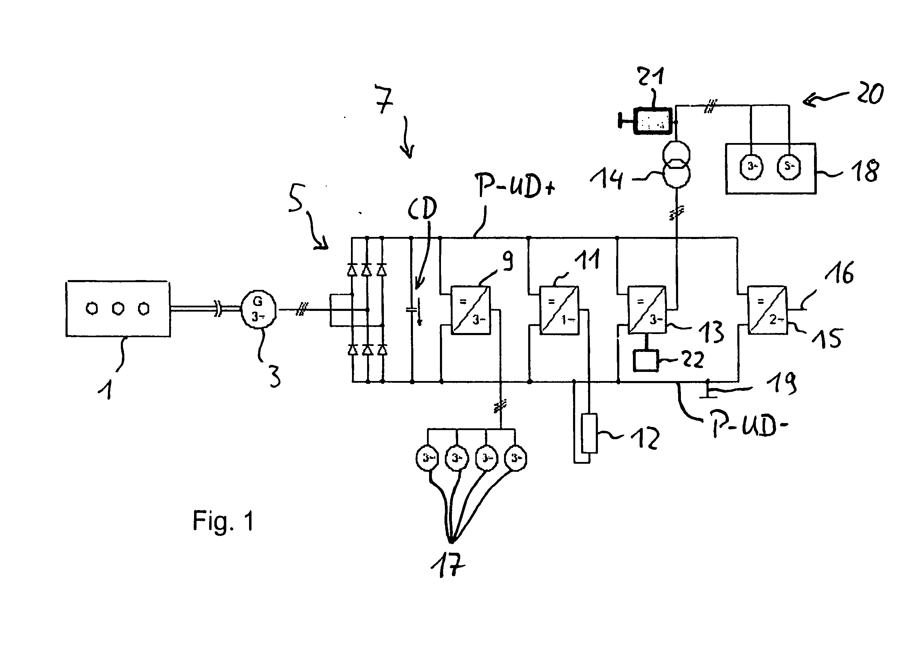

In Fig. 1 zeigt einen Dieselmotor 1, der einen Generator 3 antreibt. Der Dieselmotor 1 ist in diesem Fall der Antriebsmotor, mit dem die Lokomotive angetrieben wird, d.h. auf dem Schienenweg bewegt wird. Der Generator 3 erzeugt einen Dreiphasen-Wechselstrom, welcher über einen Gleichrichter 5 gleichgerichtet wird. Der Gleichrichter 5 ist an einen Gleichspannungs-Zwischenkreis 7 angeschlossen. Die Potentiale des Gleichspannungs-Zwischenkreises 7 sind mit P-UD+ (obere in Fig. 1 dargestellte Seite des Zwischen kreises 7) und mit P-UD- (untere in Fig. 1 dargestellte Seite des Zwischenkreises 7) bezeichnet. Das Potential P-UD- kann z. B. an der mit den Bezugszeichen 19 bezeichneten Stelle mit Fahrzeugmasse verbunden sein.

An den Zwischenkreis 7 sind ein Traktionswechselrichter 9, der vier Antriebsmotoren 17 des Schienenfahrzeugs über eine dreiphasige Verbindung versorgt, ein Brems-Chopper 11, an den ein Bremswiderstand 12 angeschlossen ist, ein Hilfsbetriebe-Wechselrichter 13, der Hilfsbetriebe 18 über eine Dreiphasen-Wechselstromleitung versorgt, und ein Verbraucher-Wechselrichter 15 angeschlossen, der Verbraucher z. B. in einem angekoppelten Zugverband über eine einphasige Zugsammelschiene mit elektrischer Energie versorgt.

Der in Fig. 1 dargestellte Hilfsbetriebe-Wechselrichter 13 ist über einen Trenntransformator 14, der eine galvanische Trennung bewirkt, mit den Hilfsbetrieben 18 verbunden. In der dargestellten Ausführungsform weist das System zum Versorgen der Hilfsbetriebe 18 mit elektrischer Energie den Transformator 14, die Dreiphasen-Leitung und die Schutzeinrichtung 21 auf. Der Hilfsbetriebe-Wechselrichter 13 wird von einer Steuerung 22 betrieben, die das Ein- und Ausschalten der Ventile (z. B. bipolare Transistoren, vorzugsweise IGBTs, oder GTOs, Gate Turn-Off Thyristoren) steuert.

Im Vergleich zu der in Fig. 1 dargestellten Anordnung kann eine Vielzahl von Modifikationen vorgenommen werden. Z.B. kann anstelle des Dieselmotors und des Generators sowie des Dreiphasen-Gleichrichters 5 ein Anschluss an ein Einphasen-Hochspannungsnetz (bei einem Wechselspannungsnetz über einen Gleichrichter) vorgesehen sein. Zusätzlich zu dem einen Gleichspannungs-Zwischenkreis 7 kann ein weiterer oder können mehrere weitere Zwischenkreise vorgesehen sein, über die ein Teil der Fahrmotoren oder zusätzliche Fahrmotoren mit Energie versorgt werden. An dem Gleichspannungs-Zwischenkreis können weitere Einrichtungen angeschlossen sein und/oder in diesen integriert sein, insbesondere Sicherungen und/oder ein Saugkreis. An denselben Gleichspannungs-Zwischenkreis kann eine Mehrzahl von Hilfsbetriebe-Wechselrichtem angeschlossen sein.

Die Versorgung der Hilfsbetriebe kann lediglich einphasig ausgestaltet sein.

Bei den Hilfsbetrieben 18 kann es sich insbesondere um ein oder mehrere der eingangs in dieser Beschreibung erwähnten Hilfsbetriebe handeln. Z.B. gehört zu den Hilfsbetrieben 18 auch eine Kühleinrichtung zum Kühlen des Stromrichters 13, des Transformators 14 und/oder für die Kühlung einer oder mehrerer der anderen Stromrichter 9, 11, 15 und/oder der Fahrmotoren 17. Auch die Steuereinrichtungen zum Steuern des Betriebs der Stromrichter 9, 11, 13, 15 können zu den Hilfsbetrieben 18 gehören. Im außerordentlichen Betrieb kann jedoch ein Betrieb des Stromrichters 15 für die Versorgung von angekoppelten Schienenfahrzeug-Einheiten entfallen.

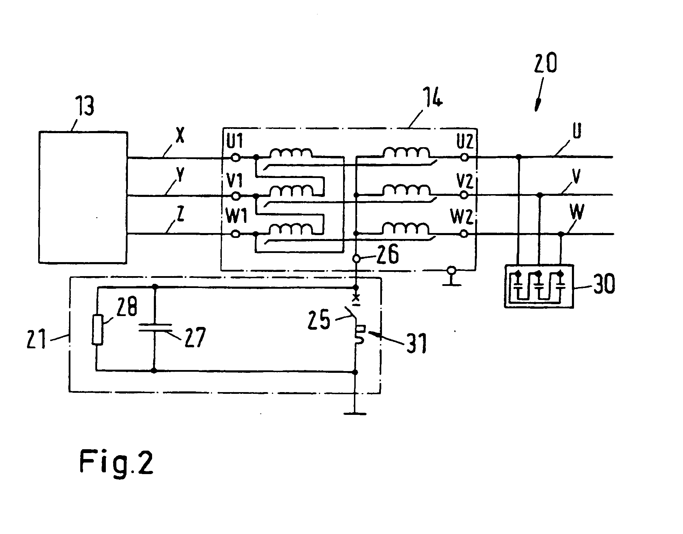

Figur 2 zeigt eine dreiphasige Ausführungsform des Hilfsbetriebe-Systems 20. Der an den Gleichspannungszwischenkreis 7 angeschlossene (nicht in Figur 2 dargestellt) Wechselrichter 13 ist an seiner Wechselspannungsseite mit den drei Phasen X, Y, Z einer Dreiphasen-Verbindungsleitung angeschlossen, die an den Klemmen U1, V1, W1 mit der Primärseite des Trenntransformators 14 verbunden ist. Die Sekundärseite des Trenntransformators 14 ist an den Klemmen U2, V2, W2 mit den drei Phasen U, V, W des Hilfsbetriebe-Systems 20 verbunden.

Zur Dämpfung und Filterung störender Oberschwingungen ist eine Filtereinrichtung 30 mit den drei Phasen U, V, W verbunden, die z. B. eine Mehrzahl von Filterkondensatoren aufweist.

Mit dem Stempunkt 26 auf der Sekundärseite des Transformators 14 ist die Schutzeinrichtung 21 verbunden. Teile der Schutzeinrichtung 21 sind ein Schutzschalter 25, ein parallel dazu geschalteter Kondensator 27 (es können auch mehrere in Reihe und/oder parallel zueinander geschaltete Kondensatoren vorgesehen sein) und ein wiederum parallel zu dem Schalter 25 und dem Kondensator 27 geschalteter hochohmiger Widerstand 28, der beispielsweise einen Widerstandwert von mindestens 20 kOhm, vorzugsweise mindestens 50 kOhm hat. Der Kondensator 27 verringert hohe Stromspitzen bzw. Spannungsspitzen in dem System 20 aufgrund von common mode-Strömen. Der hochohmige Widerstand 28 dient zur Potentialfixierung des Hilfsbetriebe-Systems 20 und als Entladewiderstand für den Kondensator 27, falls der Schutzschalter 25 geöffnet hat.

Im normalen, ungestörten Zustand ist die Sekundärseite des Transformators 14 lediglich über den geschlossenen Schutzschalter 25 mit Fahrzeugmasse verbunden, wie es unterhalb der Schutzeinrichtung 21 durch einen Querstrich an der dort endenden Leitung angedeutet ist. Integrierte Sensoren 31 des Schutzschalters 25 detektieren im Störungsfall, wenn an einer anderen Stelle ein Kurzschluss zu Fahrzeugmasse auftritt, das Auftreten von hohen Kurzschlussströmen und eine Steuerung öffnet den Schalter 25. Die Steuerung kann in das Schalter-Bauteil integriert sein oder separat ausgeschaltet sein.

Da zwischen dem Stempunkt 26 und Fahrzeugmasse bei geschlossenem Schutzschalter 25 theoretisch ein sehr hoher Strom fließen kann, solange der Schutzschalter 25 noch nicht geöffnet ist, ist die Steuerung 22 des Hilfsbetriebe-Umrichters 13 vorzugsweise so ausgestaltet, dass solche extrem hohen Ströme durch geeignete Steuerung des Umrichters 13 vermieden werden. Hierzu werden beispielsweise die Ströme durch die Phasen X, Y, Z gemessen und die Messergebnisse der Steuerung 22 zugeleitet. Die Steuerung 22 wertet aus, ob Grenzwerte in den einzelnen Phasen und/oder ein Summengrenzwert für alle Phasen überschritten ist. Wenn dies der Fall ist, wird die einzelne Phase oder werden alle drei Phasen X, Y, Z so betrieben, dass die Ströme wieder begrenzt sind auf den jeweiligen Grenzwert. Ein derartiges Konzept zur entsprechenden Ansteuerung der Ventile des Umrichters 13 ist an sich bekannt. Die Erfindung wendet dieses Prinzip nun auf die Situation in dem Fall des Hilfsbetriebe-Systems 20 an. Über die induktive Kopplung der Primärseite und Sekundärseite des Transformators 14 werden auf diese Weise auch die Ströme auf der Sekundärseite begrenzt und extrem hohe Ströme über den geschlossenen Schutzschalter 25 können nicht auftreten, bis dieser geöffnet hat.

Als Schutzschalter können an sich bekannte Bauelemente verwendet werden, die (wie erwähnt) eine entsprechende Sensorik aufweisen, um bei einem hohen Strom entsprechend der zeitlichen Auslösecharakteristik den Schutzschalter zu öffnen. Ein anderer Begriff für den Schutzschalter ist daher Sicherungsautomat.

## Patentansprüche

1. System (20) zur Versorgung von Hilfsbetrieben (18) in einem Schienenfahrzeug mit elektrischer Energie, mit einem Schutzschalter (25), der beim Auftreten eines Stromflusses durch den geschlossenen Schutzschalter (25), der durch einen zusätzlichen Kontakt des Systems (20) zu dem Bezugspotenzial verursacht wird, öffnet,
**gekennzeichnet dadurch** das
- das System (20) über einen Trenntransformator (14) mit einer Energiequelle verbunden ist, z.B. über einen Stromrichter (13), der aus einem Gleichspannungs-Zwischenkreis (7) gespeist wird,
- das System (20) ohne Zwischenschaltung eines den Stromfluss begrenzenden Widerstandes über einen Schutzschalter (25) mit einem elektrischen Bezugspotenzial verbunden ist, insbesondere mit der Fahrzeugmasse.

2. System nach Anspruch 1, wobei das System (20) ein Dreiphasen-System ist und der Schutzschalter (25) im geschlossenen Zustand einen Stempunkt (26) der drei Phasen (U, V, W) mit dem Bezugspotenzial verbindet.

3. System nach Anspruch 1 oder 2, wobei das System (20) über eine parallel zu dem Schutzschalter (25) angeordnete Kapazität (27) mit dem Bezugspotenzial verbunden ist.

4. System nach einem der Ansprüche 1 bis 3, wobei das System (20) über einen parallel zu dem Schutzschalter (25) angeordneten hochohmigen Widerstand (28) mit dem Bezugspotenzial verbunden ist.

5. System nach einem der Ansprüche 1 bis 4, wobei der Transformator (14) auf seiner Primärseite über einen Stromrichter (13) mit der Energiequelle (7) verbunden ist, wobei der Stromrichter (13) durch Ein- und Ausschalten von Stromventilen betrieben wird, wobei eine Steuerung (22) zum Steuern des Ein- und Ausschaltens vorgesehen ist, die derart ausgestaltet ist, dass beim Überschreiten eines vorgegebenen Phasen-Stromgrenzwerts in einer Phase (X, Y, Z) und/oder beim Überschreiten eines Gesamt-Stromgrenzwerts durch die Summe der Ströme in mehreren Phasen (X, Y, Z), der Strom in der Phase (X, Y, Z) oder in allen Phasen (X, Y, Z) auf den jeweiligen Grenzwert begrenzt wird, indem das Ein- und Ausschalten der Ventile entsprechend gesteuert wird.

6. Verfahren zum Schützen eines Systems (20) zur Versorgung von Hilfsbetrieben (18) in einem Schienenfahrzeug mit elektrischer Energie bei einem unbeabsichtigten Kontakt mit einem Bezugspotenzial, insbesondere mit Fahrzeugmasse, wobei
- das System (20) über einen Trenntransformator (14) mit einer Energiequelle (7), z.B. einem Gleichspannungs-Zwischenkreis, verbunden wird,
- das System (20) ohne Zwischenschaltung eines den Stromfluss begrenzenden Widerstandes über einen Schutzschalter (25) mit einem elektrischen Bezugspotenzial verbunden wird, insbesondere mit Fahrzeugmasse,
- der Schutzschalter (25) beim Auftreten eines Stromflusses durch den geschlossenen Schutzschalter (25), der durch einen zusätzlichen Kontakt des Systems (20) zu dem Bezugspotenzial verursacht wird, geöffnet wird.

7. Verfahren nach Anspruch 6, wobei das System (20) ein Dreiphasen-System (U, V, W) ist und der Schutzschalter (25) im geschlossenen Zustand einen Stempunkt (26) der drei Phasen mit dem Bezugspotenzial verbindet.

8. Verfahren nach Anspruch 6 oder 7, wobei das System über eine parallel zu dem Schutzschalter (25) angeordnete Kapazität (27) mit dem Bezugspotenzial verbunden wird.

9. Verfahren nach einem der Ansprüche 6 bis 8, wobei das System (20) über einen parallel zu dem Schutzschalter angeordneten hochohmigen Widerstand (28) mit dem Bezugspotenzial verbunden wird.

10. Verfahren nach einem der Ansprüche 6 bis 9, wobei der Transformator (14) auf seiner Primärseite über einen Stromrichter (13) mit der Energiequelle (7) verbunden wird, wobei der Stromrichter (13) durch Ein- und Ausschalten von Stromventilen betrieben wird, wobei beim Überschreiten eines vorgegebenen Phasen-Stromgrenzwerts in einer Phase (X, Y, Z) und/oder beim Überschreiten eines Gesamt-Stromgrenzwerts durch die Summe der Ströme in mehreren Phasen (X, Y, Z), der Strom in der Phase (X, Y, Z) oder in allen Phasen (X, Y, Z) auf den jeweiligen Grenzwert begrenzt wird, indem das Ein- und Ausschalten der Ventile entsprechend gesteuert wird.

## Claims

1. A system (20) for supplying auxiliary devices (18) in a rail vehicle with electrical power, comprising a circuit breaker (25) which is designed to open when a current flow occurs through the closed circuit breaker (25) caused by an additional contact of the system (20) with the reference potential,
**characterized in that**
- the system (20) is connected via an isolating transformer (14) to an energy source, for example via a current converter (14) which is feeded by a DC voltage intermediate circuit (7),
- the system (20) is connected via a circuit breaker (25) to an electrical reference potential, in particular to vehicle ground, without the interposition of a resistance limiting the current flow.

2. The system as claimed in claim 1, wherein the system (20) is a three-phase system, and, when closed, the circuit breaker (25) connects a starpoint (26) of the three phases (U, V, W) to the reference potential.

3. The system as claimed in claim 1 or 2, wherein the system (20) is connected to the reference potential via a capacitance (27) which is arranged in parallel with the circuit breaker (25).

4. The system as claimed in one of claims 1 to 3, wherein the system (20) is connected to the reference potential via a high-value resistance (28) which is arranged in parallel with the circuit breaker (25).

5. The system as claimed in one of claims 1 to 4, wherein the transformer (14) is connected on its primary side via a converter (13) to the energy source (7) wherein the converter (13) is operated by switching current valves on and off, wherein a controller (22) is provided to control the switching on and off, and is designed such that, when a predetermined phase current limit value is exceeded in one phase (X, Y, Z) and/or when a total current limit value is exceeded by the sum of the currents in the plurality of phases (X, Y, Z), the current in that phase (X, Y, Z) or in all phases (X, Y, Z) is limited to the respective limit value by controlling the valves to be switched on and off appropriately.

6. A method for protecting a system (20) for supplying auxiliary devices (18) in a rail vehicle with electrical power in the event of inadvertent contact with a reference potential, in particular with vehicle ground, wherein
- the system (20) is connected via an isolating transformer (14) to an energy source (7), for example a DC voltage intermediate circuit,
- the system (20) is connected via a circuit breaker (25) to an electrical reference potential, in particular to vehicle ground, without the interposition of a resistance limiting the current flow,
- the circuit breaker (25) is opened when a current flow occurs through the closed circuit breaker (25) caused by an additional contact of the system (20) with the reference potential.

7. The method as claimed in claim 6, wherein the system (20) is a three-phase system (U, V, W), and, when closed, the circuit breaker (25) connects a starpoint (26) of the three phases to the reference potential.

8. The method as claimed in claim 6 or 7, wherein the system is connected to the reference potential via a capacitance (27) which is arranged in parallel with the circuit breaker (25).

9. The method as claimed in one of claims 6 to 8, wherein the system (20) is connected to the reference potential via a high-value resistance (28) which is arranged in parallel with the circuit breaker.

10. The method as claimed in one of claims 6 to 9, wherein the transformer (14) is connected on its primary side via a converter (13) to the energy source (7) wherein the converter (13) is operated by switching current valves on and off, wherein when a predetermined phase current limit value is exceeded in one phase (X, Y, Z) and/or when a total current limit value is exceeded by the sum of the currents in the plurality of phases (X, Y, Z), the current in that phase (X, Y, Z) or in all phases (X, Y, Z) is limited to the respective limit value by controlling the valves to be switched on and off appropriately.

## Revendications

1. Système (20) pour l'alimentation d'auxiliaires (18) dans un véhicule sur rails avec de l'énergie électrique, avec un commutateur de sécurité (25) qui s'ouvre à l'apparition d'un flux de courant à travers le commutateur de sécurité (25) fermé, lequel flux de courant est produit par un contact supplémentaire du système (20) au potentiel de référence,
**caractérisé en ce que**
- le système (20) est relié par l'intermédiaire d'un transformateur d'isolation (14) à une source d'énergie, par exemple par l'intermédiaire d'un convertisseur (13) qui est alimenté à partir d'un circuit intermédiaire à tension continue (7),
- le système (20) est raccordé par l'intermédiaire d'un commutateur de sécurité (25) à un potentiel électrique de référence, en particulier à la masse du véhicule, sans connexion intermédiaire d'une résistance limitant le flux de courant.

2. Système selon la revendication 1, dans lequel le système (20) est un système triphasé et dans lequel le commutateur de sécurité (25), à l'état fermé, connecte un point neutre (26) des trois phases (U, V, W) au potentiel de référence.

3. Système selon la revendication 1 ou 2, dans lequel le système (20) est connecté au potentiel de référence par l'intermédiaire d'une capacité (27) disposée en parallèle au commutateur de sécurité (25).

4. Système selon l'une des revendications 1 à 3, dans lequel le système (20) est connecté au potentiel de référence par l'intermédiaire d'une résistance à valeur ohmique élevée (28) disposée en parallèle au commutateur de sécurité (25).

5. Système selon l'une des revendications 1 à 4, dans lequel le transformateur (14) est connecté sur son côté primaire par l'intermédiaire d'un convertisseur (13) à la source d'énergie (7), moyennant quoi le convertisseur (13) est actionné grâce à la mise en circuit et hors circuit de régulateurs de courant, un dispositif de commande (22) pour la commande de la mise en circuit et hors circuit étant prévu, lequel est conçu de manière à ce qu'en cas de dépassement par le haut d'une valeur de seuil de courant-phase dans une phase (X, Y, Z) et/ou en cas de dépassement par le haut d'une valeur de seuil globale du courant grâce à la somme des flux dans plusieurs phases (X, Y, Z), le courant dans la phase (X, Y, Z) ou dans toutes les phases (X, Y, Z) est limité à la valeur de seuil respective en commandant de manière correspondante la mise en circuit et hors circuit des régulateurs.

6. Procédé pour la protection d'un système (20) pour l'alimentation d'auxiliaires (18) dans un véhicule sur rails avec de l'énergie électrique en cas de contact involontaire avec un potentiel de référence, en particulier la masse du véhicule, dans lequel
- le système (20) est relié par l'intermédiaire d'un transformateur d'isolation (14) à une source d'énergie (7), par exemple un circuit intermédiaire à tension continue,
- le système (20) est raccordé sans connexion intermédiaire d'une résistance limitant le flux de courant par l'intermédiaire d'un commutateur de sécurité (25) à un potentiel électrique de référence, en particulier à la masse du véhicule,
- le commutateur de sécurité (25) s'ouvre en cas d'apparition d'un flux de courant à travers le commutateur de circuit (25) fermé, lequel flux de courant est produit par un contact supplémentaire du système (20) au potentiel de référence.

7. Procédé selon la revendication 6, dans lequel le système (20) est un système triphasé (U, V, W) et dans lequel le commutateur de sécurité (25), à l'état fermé, connecte un point neutre (26) des trois phases au potentiel de référence.

8. Procédé selon la revendication 6 ou 7, dans lequel le système est connecté au potentiel de référence par l'intermédiaire d'une capacité (27) disposée en parallèle au commutateur de sécurité (25).

9. Procédé selon l'une des revendications 6 à 8, dans lequel le système (20) est connecté au potentiel de référence par l'intermédiaire d'une résistance à valeur ohmique élevée (28) disposée en parallèle au commutateur de sécurité.

10. Procédé selon l'une des revendications 6 à 9, dans lequel le transformateur (14) est connecté sur son côté primaire par l'intermédiaire d'un convertisseur (13) à la source d'énergie (7), le convertisseur (13) étant actionné par la mise en circuit et hors circuit de régulateurs de courant, moyennant quoi en cas de dépassement par le haut d'une valeur de seuil de courant-phase dans une phase (X, Y, Z) et/ou en cas de dépassement par le haut d'une valeur de seuil globale du courant grâce à la somme des flux dans plusieurs phases (X, Y, Z), le courant dans la phase (X, Y, Z) ou dans toutes les phases (X, Y, Z) est limité à la valeur de seuil respective en commandant de manière correspondante la mise en circuit et hors circuit des régulateurs.
